(19)

Europäisches
Patentamt

European
Patent Office

Office européen
des brevets

(11) **EP 4 745 917 A1**

(12) **EUROPEAN PATENT APPLICATION**

(43) Date of publication:
**20.05.2026 Bulletin 2026/21**

(21) Application number: **25216020.5**

(22) Date of filing: **14.11.2025**

(51) International Patent Classification (IPC):
**G06V 10/82** (2022.01)  **G06T 7/20** (2017.01)
**G06V 20/56** (2022.01)  **G06V 20/58** (2022.01)

(52) Cooperative Patent Classification (CPC):
**G06V 20/56; G06T 7/20; G06V 10/82;** G06V 20/58

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **15.11.2024 US 202463721396 P**

(71) Applicant: **WAYMO LLC**
**Mountain View, CA 94043 (US)**

(72) Inventors:
• **LUO, Katie**
  **Mountain View, 94043 (US)**
• **JI, Jingwei**
  **Mountain View, 94043 (US)**
• **TAN, Mingxing**
  **Mountain View, 94043 (US)**

(74) Representative: **Chettle, John Edward et al**
**Venner Shipley LLP**
**200 Aldersgate**
**London EC1A 4HD (GB)**

(54) **ENHANCING SCENE PREDICTIONS FOR AUTONOMOUS DRIVING WITH MULTIMODAL LANGUAGE MODELS**

(57)    Methods, systems, and apparatus, including computer programs encoded on a computer storage medium, for performing a prediction task using sensor data. The method includes obtaining scene data characterizing a scene in an environment at a current time point, wherein the scene comprises an autonomous vehicle and a plurality of agents, wherein the scene data comprises sensor data captured by one or more sensors of the autonomous vehicle and scene context data; generating, from the sensor data using a multimodal language model (MLM) neural network, one or more text outputs that each describe one or more aspects of the scene; generating, from at least the one or more text outputs describing the one or more aspects of the scene and the scene context data, a prediction input to a prediction neural network; and processing the prediction input using the prediction neural network to generate a prediction output for the prediction task.

**EP 4 745 917 A1**

**Description**

BACKGROUND

This specification relates to generating predictions characterizing one or more agents in an environment.

The environment may be a real-world environment, and the agent may be, e.g., a vehicle in the environment.

For example, the prediction can be a prediction of the future trajectory of the agent. Predicting the future trajectories of agents is a task required for motion planning, e.g., by an autonomous vehicle.

Autonomous vehicles include autonomous cars, boats, and aircraft.

Autonomous vehicles use a variety of on-board sensors and computer systems to detect nearby objects and use such detections to make control and navigation decisions, e.g., by predicting the future trajectories of agents in the vicinity of the autonomous vehicles using the detections.

SUMMARY

This specification describes a system implemented as computer programs on one or more computers in one or more locations that performs a prediction task by processing sensor data using a multimodal language model (MLM).

The method includes obtaining scene data characterizing a scene in an environment at a current time point, where the scene includes an autonomous vehicle and a plurality of agents and wherein the scene data comprises sensor data captured by one or more sensors of the autonomous vehicle and scene context data; generating, from the sensor data and using a MLM neural network, one or more text outputs that each describe one or more aspects of the scene; generating, from at least the one or more text outputs describing the one or more aspects of the scene and the scene context data, a prediction input to a prediction neural network; and processing the prediction input using the prediction neural network to generate a prediction output characterizing the scene for a prediction task.

In some implementations, the method further includes controlling the autonomous vehicle using the prediction output.

In some implementations, the prediction output is a motion forecasting output that predicts respective future motion of each of one or more of the plurality of agents after the current time point.

In some implementations, the sensor data comprises one or more camera images captured by one or more camera sensors of the autonomous vehicle.

In some implementations, generating, from the sensor data and using a multimodal language model (MLM) neural network, one or more text outputs that each describe one or more aspects of the scene includes: generating, from the sensor data, a first input to the MLM neural network; and processing the first input using the MLM neural network to generate a first text output that specifies a respective value for each of a set of scene-level properties of the scene.

In some implementations, the first input includes one or more sensor readings from the sensor data and a prompt input that causes the MLM neural network to generate the first text output that specifies the respective values for the set of scene-level properties of the scene.

In some implementations, the prompt input includes a chain-of-thought prompt and wherein the first text output further comprises a natural language reasoning output corresponding to the respective values for the set of scene-level properties.

In some implementations, generating, from at least the one or more text outputs describing the one or more aspects of the scene and the scene context data, a prediction input to a prediction neural network includes: generating a first vector from the respective values for the scene-level properties of the scene in the first text output.

In some implementations, generating, from the sensor data and using a multimodal language model (MLM) neural network, one or more text outputs that each describe one or more aspects of the scene includes: generating, from the sensor data and using the MLM neural network, a respective second text output for each agent in the scene that specifies a respective value for each of a respective set of agent properties of the agent.

In some implementations, generating, from at least the one or more text outputs describing the one or more aspects of the scene and the scene context data, a prediction input to a prediction neural network includes:for each agent, generating a respective second vector from the respective values for the respective set of agent properties of the agent in the second text output for the agent.

In some implementations, generating, from the sensor data and using the MLM neural network, a respective second text output for each agent in the scene that specifies a respective value for each of a respective set of agent properties of the agent includes: generating one or more second inputs from the sensor data, wherein each second input corresponds to one or more of the agents; and processing each of the second inputs using the MLM neural network to generate the respective second text outputs for the corresponding one or more agents.

In some implementations, the multiple agents include agents of multiple different agent types and each second input corresponds to a different one of the agent types.

In some implementations, different agent types have different agent properties.

In some implementations, each second input includes one or more annotated sensor readings that are annotated to depict locations of one or more of the agents.

In some implementations, each second input includes one or more cropped sensor readings that are each cropped from a corresponding sensor reading to depict a corresponding agent.

In some implementations, the prediction neural network has been trained on training data for the prediction task.

In some implementations, the MLM neural network has been held fixed during the training of the prediction neural network on the prediction task.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a block diagram of an example system.
FIG. 2 is another block diagram of the example system.
FIG. 3 is a diagram of example inputs and outputs for the example system.
FIG. 4 is another diagram of example inputs and outputs for the example system.
FIG. 5 is a diagram of example inputs for the example system.
FIG. 6 is a diagram of example outputs for a multimodal language model (MLM) of the example system.
FIG. 7 is a block diagram of the MLM and a prediction inference system.
FIG. 8 is a flow diagram of an example process for performing a prediction task on received sensor data.
FIG. 9 is a diagram illustrating the results of implementing the example system for a prediction task.

Like reference numbers and designations in the various drawings indicate like elements.

DETAILED DESCRIPTION

This specification describes a system implemented as computer programs on one or more computers in one or more locations that performs a prediction task using sensor data generated by one or more sensors of an autonomous vehicle navigating through an environment.

Accurately forecasting the future motion of agents in an autonomous-driving environment is a complex challenge because it requires not only interpreting the current scene, but also reasoning about dynamic interactions, environmental context, and rare or unseen situations. For example, an autonomous vehicle may approach an intersection containing multiple agents with different motion plans (e.g., vehicles slowing or turning, pedestrians crossing, and so on). Conventional motion-forecasting systems rely purely on numerically encoded perception features and do not exploit high-level reasoning or textual context, which limits their ability to generalize to novel scenarios and to explain their predictions.

In contrast, the described system leverages a multimodal language model (MLM) neural network by processing scene data to generate textual descriptions of a scene for performing a prediction task. In particular, the system can obtain sensor data characterizing a scene in an environment at a current time point captured by one or more sensors of the autonomous vehicle, along with scene context data, such as road graph data, traffic light data, and agent history data. The system can then process the sensor data using the MLM neural network to generate one or more text outputs that each describe one or more aspects of the scene, and the system can process the one or more text outputs and the scene context data to generate a prediction input for a prediction neural network. The system can then process the prediction input using the prediction neural network to generate a prediction output characterizing the scene for a prediction task, such as forecasting future agent trajectories and/or planning a future trajectory for the autonomous vehicle. That is, the described system represents a significant improvement over existing techniques by leveraging the textual reasoning provided by the MLM neural network to improve the accuracy and performance of the prediction neural network, even if the MLM neural network has been pre-trained and is not trained jointly with the prediction neural network.

Advantageously, the system can be deployed in both real-world and simulated environments. In a real-world autonomous vehicle, the prediction outputs can be used by on-board control and planning modules to guide navigation in complex or uncertain scenarios. For simulations, the same system can be used to test and validate the control software of a real-world autonomous vehicle before deployment, train machine-learning models that will later be deployed on-board, or evaluate the realism of simulated scenarios by generating predictions that reveal whether the simulated interactions align with those likely to occur in the real world. Generating these predictions in simulation can further assist in ensuring that simulated environments include unexpected or rare interactions that would challenge conventional forecasting systems.

As such, the described system provides a language-augmented multimodal framework for autonomous driving prediction that combines structured scene understanding from pre-trained large language models with numerical features from traditional motion-prediction networks. This results in more accurate forecasting while reducing the need for model retraining, thereby improving both real-world safety and simulation-based development of autonomous vehicles.

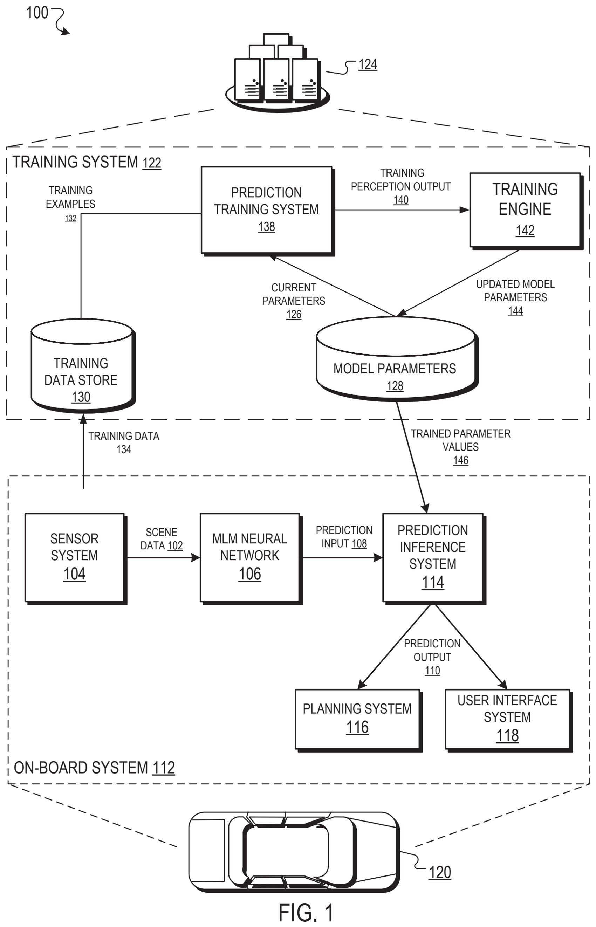

FIG. 1 is a diagram of an example system 100. The system 100 includes an on-board system 112 and a training system 122.

The on-board system 112 is located on-board a vehicle 120. The vehicle 120 in FIG. 1 is illustrated as an automobile, but the on-board system 112 can be located on-board any appropriate vehicle type.

In some cases, the vehicle 120 is an autonomous vehicle. An autonomous vehicle can be a fully driverless autonomous vehicle that determines and executes fully-autonomous driving decisions in order to navigate through an environment. An autonomous vehicle can also be a semi-autonomous vehicle that uses predictions to aid a human driver. For example, the vehicle 120 can autonomously apply the brakes if a prediction indicates that a human driver is about to collide with another vehicle. As another example, the vehicle 120 can have an advanced driver assistance system (ADAS) that assists a human driver of the vehicle 120 in driving the vehicle 120 by detecting potentially unsafe situations and alerting the human driver or otherwise responding to the unsafe situation. As a particular example, the vehicle 120 can alert the driver of the vehicle 120 or take an autonomous driving action when an obstacle is detected, when the vehicle departs from a driving lane, or when an object is detected in a blind spot of the human driver.

The on-board system 112 includes a sensor system 104 which enables the on-board system 112 to "see" the environment in the vicinity of the vehicle 120. More specifically, the sensor system 104 includes one or more sensors, some of which are configured to receive reflections of electromagnetic radiation from the environment in the vicinity of the vehicle 120. For example, the sensor system 104 can include one or more laser sensors (e.g., lidar laser sensors) that are configured to detect reflections of laser light. That is, the lidar laser sensors can collect data in the form of point clouds, where each point of the point cloud represents a feature of the environment at a particular time point. As another example, the sensor system 104 can include one or more radar sensors that are configured to detect reflections of radio waves. As another example, the sensor system 104 can include one or more camera sensors that are configured to detect reflections of visible light. That is, a camera sensor can capture one or more camera images at different time points.

The sensor system 104 continually (i.e., at each of multiple time points) captures raw sensor data, which can indicate the directions, intensities, and distances travelled by reflected radiation. For example, a sensor in the sensor system 104 can transmit one or more pulses of electromagnetic radiation in a particular direction and can measure the intensity of any reflections as well as the time that the reflection was received. A distance can be computed by determining the time which elapses between transmitting a pulse and receiving its reflection. Each sensor can continually sweep a particular space in angle, azimuth, or both. Sweeping in azimuth, for example, can allow a sensor to detect multiple objects along the same line of sight.

The on-board system 112 can obtain scene data 102 that characterizes a current scene in an environment being navigated by an autonomous vehicle 120. The scene data 102 includes sensor data and scene context data. The sensor data can include raw sensor data captured by one or more sensors of a sensor system 104 at the current time point, such as camera images, radar returns, lidar point clouds, or other sensor measurements that depict the surrounding environment. The scene context data can include information derived from prior processing or other modules of the vehicle, such as road graph data that indicates lane geometry, traffic signal data, and agent history data that indicates the past or current positions, velocities, and headings of detected agents (e.g., vehicles, cyclists, or pedestrians).

At any given time point, the on-board system 112 can process the scene data 102 using a multimodal language model (MLM) neural network 106 to generate one or more text outputs that each describe one or more aspects of the scene, including scene-level conditions (e.g., weather, time of day, or road type) agent-level attributes (e.g., vehicle type, motion intention, or occlusion state), or both.

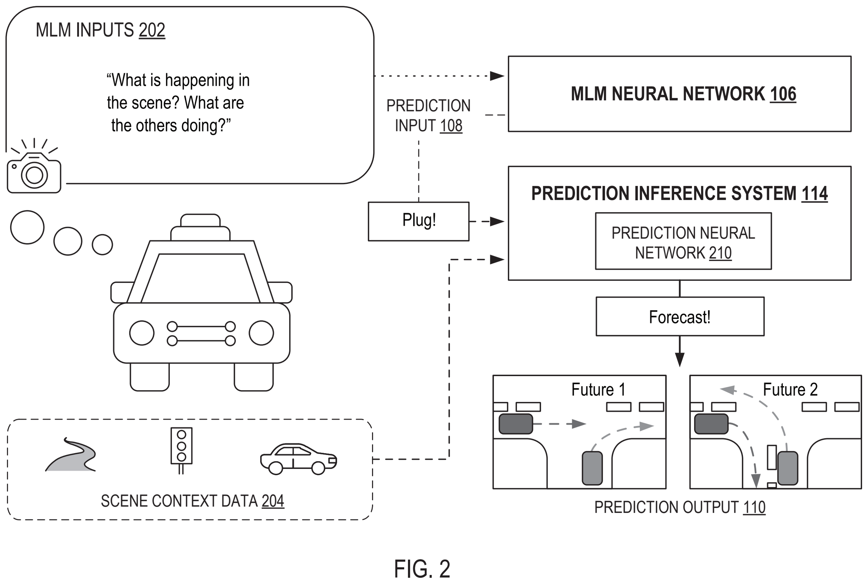

The MLM neural network 106 can be a pre-trained large multimodal model, such as Gemini, Pali, or PaliGemma, as described in further detail below with reference to FIGs. 2-6.

The system 112 can then process the text outputs together with the scene context data to generate a prediction input 108 for a prediction inference system 114.

The prediction inference system 114 can process the prediction input 108 using a prediction neural network of the prediction inference system 114 trained for a prediction task to generate a prediction output 110 characterizing the scene, e.g., predicted future trajectories for nearby agents or a planned future trajectory for the autonomous vehicle 120. For example, the prediction task can be a motion forecasting output that requires predicting the respective future motion of each of one or more of the agents, e.g., vehicles, cyclists, or pedestrians in the environment after a current time point.

That is, the motion forecasting task requires generating a motion forecasting output that predicts a respective future motion of each of one or more of the agents after the current time point. As one example of this, the task can require generating trajectory predictions for one or more target agents. Each trajectory prediction is a prediction that defines the future trajectory of the corresponding target agent starting from a current time point.

As used in this specification, a future trajectory for an agent is a sequence that includes a respective agent state for the agent for each of a plurality of future time points, i.e., time points that are after the current time point. Each agent state identifies at least a waypoint location for the corresponding time point, i.e., identifies a location of the agent at the corresponding time point. In some implementations, each agent state also includes other information about the state of the agent at the corresponding time point, e.g., the predicted heading of the agent at the corresponding time point.

As another example, the prediction task can be a planning task that requires planning a future trajectory for the autonomous vehicle after the current time point. Thus, in this example, the task requires generating a planning output that specifies a planned future trajectory for the autonomous vehicle after the current time point.

The processing performed by the prediction inference system 114 to generate the prediction output 110 is described in further detail below with reference to FIGs. 2-7.

The on-board system 112 can provide the prediction output 110 generated by the prediction inference system 114 to a planning system 116, a user interface system 118, or both.

When the planning system 116 receives the prediction output 110, the planning system 116 can use the output to make fully-autonomous or partly-autonomous driving decisions. For example, the planning system 116 can generate a fully-autonomous plan to navigate the vehicle 120 based on predicted trajectories of surrounding agents, planned future trajectories for the autonomous vehicle, or other outputs of the prediction neural network. In a particular example, the on-board system 112 may provide the planning system 116 with the prediction output 110 indicating that a detected object ahead corresponds to a pedestrian stepping into the crosswalk. In this example, the planning system 116 can generate fully-autonomous control outputs to apply the brakes of the vehicle 120 to avoid a collision with the pedestrian. The fully-autonomous or partly-autonomous driving decisions generated by the planning system 116 can be implemented by a control system of the vehicle 120. For example, in response to receiving a fully-autonomous driving decision generated by the planning system 116 which indicates that the brakes of the vehicle should be applied, the control system may transmit an electronic signal to a braking control unit of the vehicle. In response to receiving the electronic signal, the braking control unit can mechanically apply the brakes of the vehicle.

When the user interface system 118 receives the prediction output 110, the user interface system 118 can use the output to present information to the driver of the vehicle 120 to assist the driver in operating the vehicle safely. The user interface system 118 can present information to the driver of the vehicle 120 by any appropriate means, for example, by an audio message transmitted through a speaker system of the vehicle 120 or by alerts displayed on a visual display system in the vehicle (e.g., an LCD display on the dashboard of the vehicle 120). In a particular example, the on-board system 112 may provide the user interface system 118 with a prediction output 110 indicating that an object detected in the vehicle's lane corresponds to a stalled vehicle. In this example, the user interface system 118 can present an alert message to the driver of the vehicle 120 with instructions to change lanes or slow down to avoid the obstacle.

Prior to the on-board system 112 using the prediction inference system 114 to generate prediction outputs 110, a training system 122 can generate trained parameter values for the prediction neural network by training a prediction training system 138 on training data.

The training system 122 is typically hosted within a data center 124, which can be a distributed computing system having hundreds or thousands of computers in one or more locations.

The training system 122 can store the training data 134 in a training data store 130.

The training system 122 includes a prediction training system 138 that is configured to generate training prediction outputs 140 from training examples 132 using a prediction neural network. The prediction neural network of the prediction training system 138 generally has (at least partially) the same architecture as the prediction neural network of the prediction inference system 114.

The prediction training system 138 is configured to obtain training examples 132 from the training data store 130. The training examples 132 can be a subset of the training data 134. The training examples 132 in the training data store 130 may be obtained from real or simulated driving data logs.

The training examples 132 can include data from multiple different modalities. In some cases, the training examples include scene data including raw sensor outputs and scene context data. For example, the sensor data can include raw outputs captured by one or more sensors, such as a camera sensor, a radar sensor, or a lidar sensor, while the scene context data can include road graph data, traffic signal data, and agent history data that describe the past positions and velocities of surrounding vehicles, cyclists, or pedestrians. In other cases, the training examples include structured representations derived from the raw sensor data, such as lane-graph encodings, object bounding boxes, or agent trajectory annotations obtained from perception and tracking modules. These structured features can provide semantic and behavioral context that complements the raw sensor data and enables the training system 122 to generate more accurate training prediction outputs 140 that represent, for example, predicted agent trajectories or planned vehicle paths. The prediction training system 138 can process the training examples 132 to generate a training prediction output 140.

The training engine 142 trains the prediction training system 138 on the training examples 132 to generate updated model parameter values 144 by minimizing a loss function based on ground-truth labels for the prediction task. In particular, the training engine 142 trains the prediction neural network of the prediction inference system 114 using end-to-end supervision from ground-truth future trajectories or other task-specific annotations. The prediction neural network can be trained on a large-scale autonomous-driving dataset that includes scene context data, agent-history data, and corresponding ground-truth future motion labels, as described in further detail below with reference to FIG. 2

Once the parameter values of the prediction training system 138 have been fully trained, the training system 122 can send the trained parameter values 146 to the prediction inference system 114, e.g., through a wired or wireless connection.

While this specification describes that the prediction output 110 is generated on-board an autonomous vehicle, more generally, the described techniques can be implemented on any system of one or more computers that receives images of scenes in an environment. That is, once the training system 122 has trained the prediction inference system 114, the trained neural network can be used by any system of one or more computers.

As one example, the prediction output 110 can be generated on-board a different type of agent that has sensors and that interacts with objects as it navigates through an environment. For example, the prediction output 110 can be generated by one or more computers embedded within a robot or other agent.

As another example, the prediction output 110 can be generated by one or more computers that are remote from the agent and that receive images captured by one or more camera sensors of the agent. In some of these examples, the one or more computers can use the prediction output 110 to generate control decisions for controlling the agent and then provide the control decisions to the agent for execution by the agent.

As another example, the prediction output 110 can be generated in a computer simulation of a real-world environment being navigated by a simulated autonomous vehicle and simulated agents. In this case, the perception outputs can be used to evaluate a realism of the simulation, to test control software before deployment, to train machine learning models to be deployed on-board vehicles, or a combination thereof.

FIG. 2 is another block diagram of the example system.

In general, the MLM neural network 106 can process MLM inputs 202 to generate the prediction input 108, and the system can "plug" the prediction input 108 and scene context data 204 into the prediction inference system 114 to "forecast" a prediction output 110 using the prediction neural network 210.

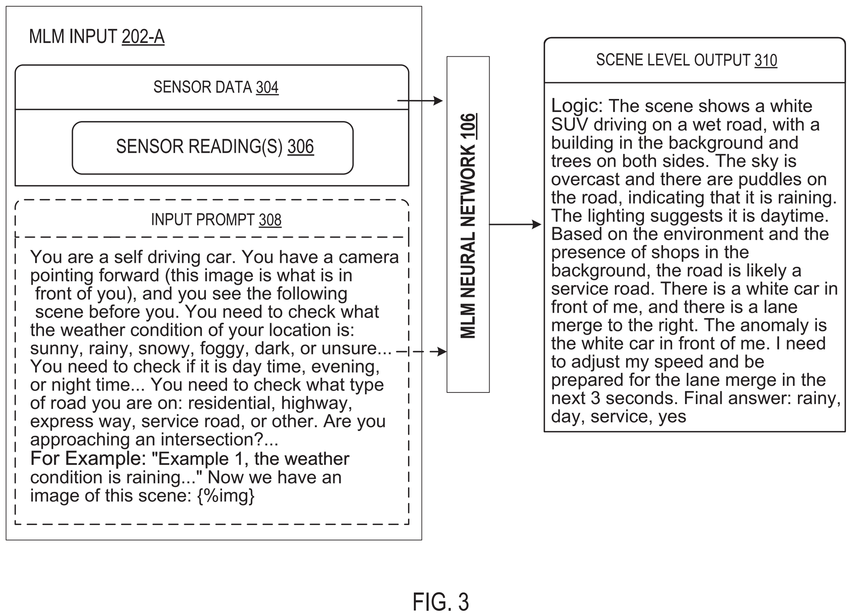

The MLM inputs 202 can include sensor data that characterizes a current driving scene and one or more prompt inputs. For example, the MLM inputs 202 can include one or more sensor readings such as camera images, radar returns, or lidar point clouds captured by the autonomous vehicle at a current time point and, in some implementations, one or more earlier sensor readings captured at preceding time points within a temporal window of the prediction inference system 114. The MLM inputs 202 can also include visual inputs such as images depicting the overall scene and/or temporal agent crops depicting particular agents over multiple frames, as described in FIGs. 3-6.

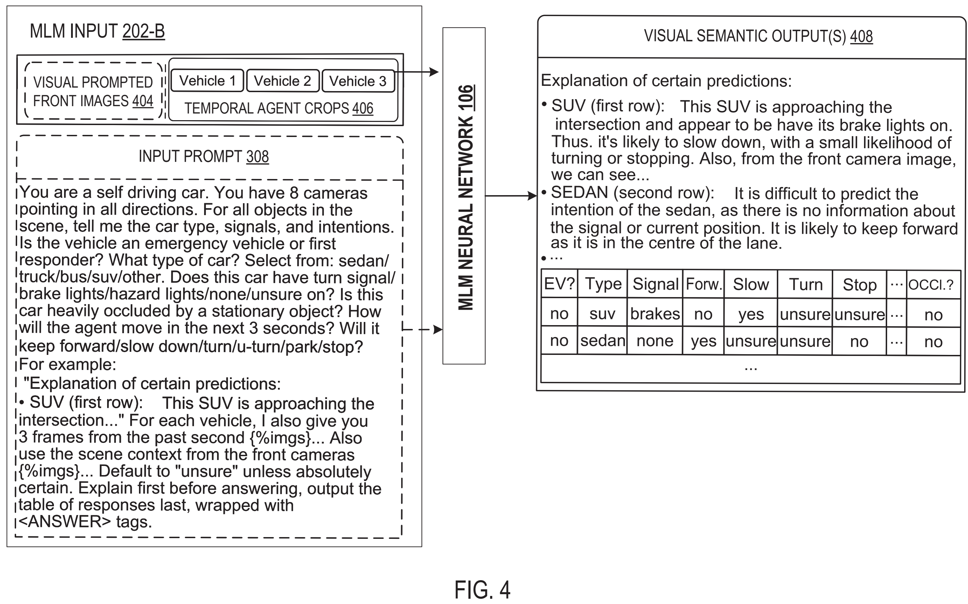

The one or more prompt inputs can be chain-of-thought textual prompts that condition the MLM neural network 106 to generate natural-language reasoning and structured outputs describing one or more aspects of the scene. That is, the MLM neural network 106 can process the MLM inputs 202 to generate one or more text outputs that each describe one or more aspects of the scene, as described in further detail below with reference to FIGs. 3 and 4. For example, the prompt inputs can include a first prompt input that causes the MLM neural network 106 to generate a first text output specifying respective values for a set of scene-level properties of the scene, such as weather conditions, time of day, road type, or whether the autonomous vehicle is approaching an intersection. As another example, instead of or in addition to the first prompt input, the prompt inputs can include one or more second prompt inputs, each corresponding to a particular agent in the scene, that cause the MLM neural network 106 to generate respective second text outputs specifying agent-level properties such as agent type, motion state, or intended behavior.

The MLM neural network 106 can include any suitable vision-language or multimodal backbone architecture, such as an image-text transformer or a unified encoder-decoder model capable of jointly processing visual and textual modalities. In some examples, the MLM neural network 106 can be a pre-trained large multimodal model, such as Gemini, Pali, or PaliGemma, that has been trained on a large corpus of multimodal data including paired image and text samples, paired video and text samples, or both. That is, the MLM neural network 106 can learn general cross-modal representations and reasoning capabilities that are transferable across tasks without being trained jointly with the prediction neural network 210 or fine-tuned specifically to generate inputs for the prediction task. Instead, the MLM neural network 106 can operate in a zero-shot or few-shot manner to generate text outputs describing aspects of the scene from the sensor data, which are then used as part of the prediction inputs to the prediction neural network 210.

The system can use the MLM neural network 106 to perform visual-language reasoning for both scene-level analysis and agent-level analysis. In particular, the system can perform visual semantic analysis using the MLM neural network 106 to generate text outputs that describe visual and contextual aspects of the scene. For example, the MLM neural network 106 can process scene-level inputs of the MLM inputs 202 (e.g., sensor data 304 and a prompt input) to generate a first text output characterizing global scene properties, such as weather, road type, and time of day, as described in further detail below with reference to FIGs. 3, 5, and 6. The MLM neural network 106 can also process agent-level inputs of the MLM inputs 202 (e.g., sensor data 304, temporal agent cropped sensor readings, and a prompt input) to generate corresponding second text outputs describing agent-specific attributes, such as a type of agent, a traffic signal state, or prediction motion of an agent, as described in further detail below with referenced to FIGs. 4-6. The MLM neural network 106 can thereby encode image features from the sensor data and generate structured language responses that capture both fine-grained visual details (e.g., presence of pedestrians, vehicles, or road markings) and higher-level semantic context (e.g., whether the autonomous vehicle is approaching an intersection, current weather, or time of day) relevant to the prediction task.

The MLM neural network 106 can include any suitable vision-language or multimodal backbone architecture, such an image-text transformer or a unified encoder-decoder model capable of jointly processing visual and textual modalities. The MLM neural network 106 can process the one or more text outputs to generate the prediction input 108. The prediction input 108 includes one or more vectors that represent the one or more text outputs. For example, the prediction input 108 can include a first vector generated from the respective values of the scene-level properties specified in the first text output and one or more second vectors, each generated from the respective values of the agent-level properties specified in the second text outputs for corresponding agents, as described in further detail below with reference to FIGs. 3-6.

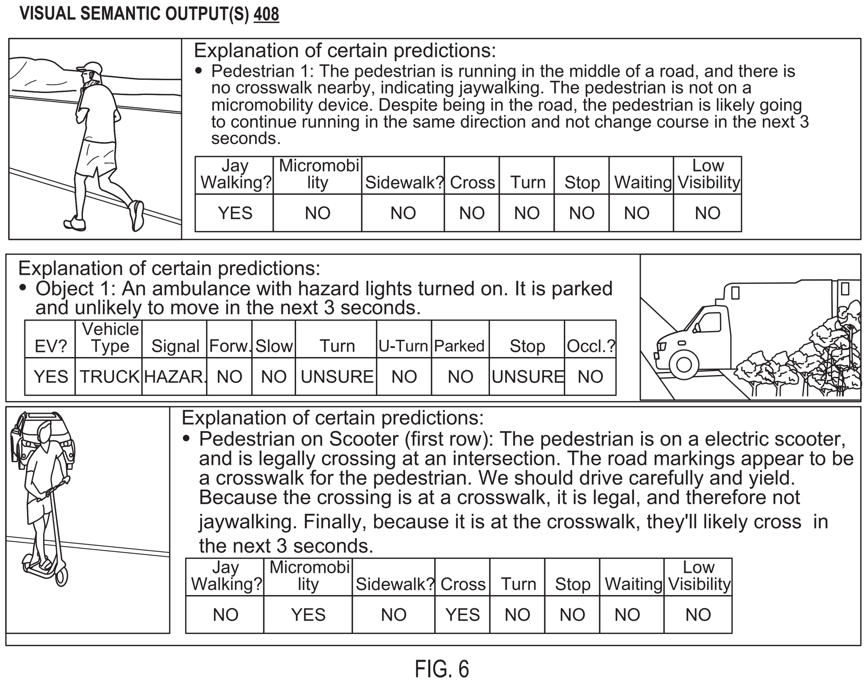

The prediction inference system 114 can then process the prediction input 108 and the scene context data 205 using the prediction neural network 210 to generate the prediction output 110 characterizing a future state of the scene for a prediction task, as described in further detail below with reference to FIG. 6.

The prediction neural network 210 can include any suitable deep learning architecture configured to process the prediction input 108 and generate the prediction output 110 for the prediction task. In some examples, the prediction neural network 210 can be implemented as a transformer-based model, a graph neural network (GNN), or another sequence-to-sequence or spatiotemporal model that captures dependencies among agents and road-graph elements over time. In particular, the prediction neural network 210 can receive the vectors of the prediction input 108 derived from the text outputs generated by the MLM neural network 106, and the prediction neural network 210 can process the vectors and the scene context data 204 using a scene encoder and a trajectory decoder, as described in further detail below with reference to FIG. 6.

The prediction neural network 210 can be trained on training data for the prediction task, such as logged trajectories from real or simulated driving scenarios that include ground-truth future agent states. During training, the system updates the prediction neural network 210 to learn optimal weights for accurately forecasting future agent states or scene outcomes, while the MLM neural network 106 is held fixed to preserve its general multimodal reasoning capabilities and prevent overfitting to the training distribution. In particular, the prediction neural network 210 can be trained to interpret the pre-trained textual embeddings produced by the MLM neural network 106 and to integrate those embeddings with scene context data to improve motion forecasting accuracy.

The training can be performed by the training engine 142, which minimizes a loss function computed between the predicted and ground-truth trajectories. In some examples, the loss function can include classification and regression components corresponding to trajectory prediction accuracy and uncertainty. For example, a classification term can encourage the network to correctly identify discrete trajectory modes (e.g., keep forward, slow down, stop, or turn), while a regression term minimizes the positional or velocity error between predicted and ground-truth agent trajectories.

As such, the prediction neural network 210 can generate a prediction output 110 that captures both quantitative motion patterns (e.g., predicted agent trajectories or velocity distributions) and qualitative contextual reasoning learned from the language-based representations.

The prediction output 110 can be a motion forecasting output that predicts a respective future motion of each of one or more of the multiple agents after the current time point. In another example, the prediction output 110 can be a planning output that specifies a planned future trajectory for the autonomous vehicle after the current time point.

The system can generate the prediction outputs 110 on-board an autonomous vehicle in real time to provide scene understanding for navigation through the environment. In this case, the on-board system can use the prediction outputs 110 to support downstream planning and control components that plan the future motion of the vehicle based on the detected road layout, obstacles, other agents in the environment, or a combination thereof.

The system can also generate the prediction output 110 in a computer simulation of a real-world environment being navigated by a simulated autonomous vehicle and simulated agents. In this case, the system can use the prediction output 110 in controlling the simulated vehicle, which ensures that the simulation includes complex or surprising interactions likely to occur in real-world driving. More generally, generating prediction output 110 in simulation can form part of testing the control software of a real-world autonomous vehicle before deployment, training one or more machine learning models that will later be deployed on-board, or both.

FIG. 3 is a diagram of example inputs and outputs for the example system.

The system can process the MLM input 202-A (e.g., the first input) using the MLM neural network 106 to generate a scene-level output 310 (e.g., a first text output) that describes one or more aspects of the scene. The MLM input 202-A includes sensor data 304 of the scene data 102 and, in some examples, an input prompt 308.

The sensor data 304 can include one or more sensor readings 306, such as camera images captured by one or more camera sensors of an autonomous vehicle, including one or more front-facing images depicting the surrounding environment of the vehicle.

The input prompt 308 can be a textual prompt that instructs the MLM neural network 106 to describe specific scene-level properties of the scene, such as weather conditions, time of day, road type, or whether the autonomous vehicle is approaching an intersection. In some examples, the input prompt 308 can further include a chain-of-thought instruction that causes the MLM neural network 106 to generate an intermediate natural-language reasoning sequence before providing final structured answers.

For example, the MLM neural network 106 can first generate a logical explanation of visual cues in the camera image (e.g., "the sky is overcast and the road surface appears wet, indicating rain"), as described in further detail below with reference to FIG. 6. The system can then use the MLM neural network 106 to generate a structured text output specifying the respective scene-level property values (e.g., rainy, day, service road, yes). The resulting scene level output 310 can therefore be a text output that specifies respective values for the set of scene-level properties of the scene, which can optionally include a natural language reasoning output corresponding to the respective values for the set of scene-level properties corresponding to the chain-of-thought reasoning text.

The system can perform language-based classification of environmental attributes from sensor data. In some examples, the system includes a prompted reasoning interface or head of the MLM neural network 106 configured to generate textual outputs describing global scene conditions.

For example, the system can use a pre-trained transformer-based multimodal backbone (e.g., an image-text transformer or encoder-decoder model) to interpret visual features from camera images and generate text outputs specifying scene-level properties such as weather, time of day, or road type. That is, rather than relying on a dedicated supervised classifier, the system can leverage the zero-shot reasoning capability of the MLM neural network 106 to perform semantic classification through natural-language generation for generating the prediction input 108.

The system can then use the MLM neural network 106 to encode the scene-level output 310 into a first vector, and the system can provide the first vector as part of the prediction input 108 to the prediction inference system 114, as described in further detail below with reference to FIG. 6

FIG. 4 is another diagram of example inputs and outputs for the example system.

The system can process the MLM input 202-B (e.g., the second input) using the MLM neural network 106 to generate one or more respective visual semantic outputs 408 (e.g., a second text output) for each agent in the scene that specifies a respective value for each of a respective set of agent properties of the agent.

The MLM input 202-B includes temporal agent crops 406 for multiple agents, visual prompted front images 404, and, in some examples, and the input prompt 308. The multiple agents can include agents of different types, such as passenger vehicles, trucks, or emergency vehicles, and the MLM input 202-B can include sensor data 304 corresponding to a different one of the agent types. For example, different agent types can have different sets of agent properties, such as signal states, speed patterns, or right-of-way behavior.

In some examples, the MLM input 202-B can include respective annotated sensor readings that depict the locations of one or more of the agents within the scene and/or cropped sensor readings that are extracted from the original sensor data to depict individual agents.

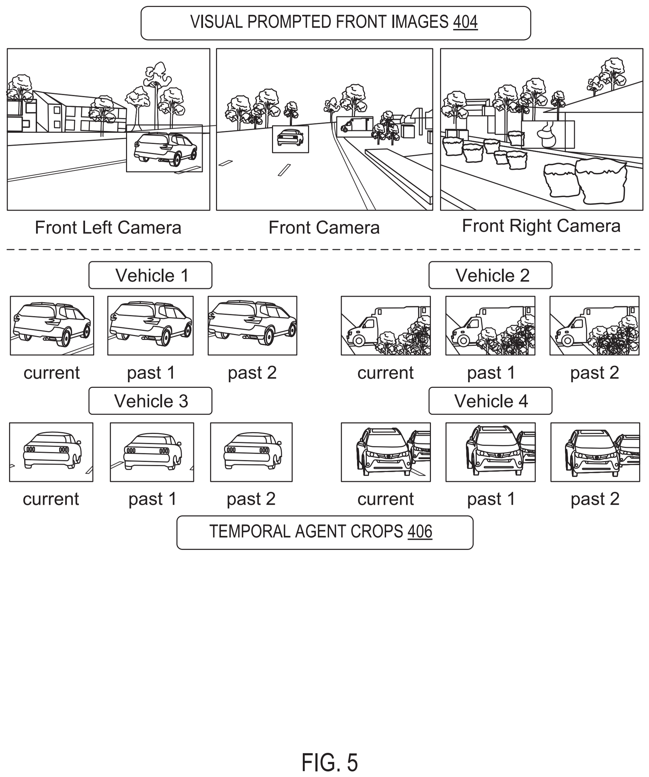

The temporal agent crops 406 can be image regions depicting a corresponding agent over multiple time points, and the visual prompted front images 404 can be front-camera sensor readings incorporated into the input prompt 308, as described in further detail below with reference to FIG. 5.

The input prompt 308 can be a textual prompt that references the temporal agent crops 406 (and, optionally, the visual prompted front images 404) and instructs the MLM neural network 106 to generate agent-level descriptions, such as whether the agent is an emergency vehicle, its vehicle class, turn/brake/hazard signals, and its likely behavior within a forecast horizon (e.g., keep forward/slow/turn/stop/park).

The visual semantic outputs 408 can be text outputs that specify, for each agent in the scene, respective values for a set of agent-level properties of the agent. For example, each visual semantic output 408 can include a chain-of-thought reasoning portion describing the visual cues used to infer the agent's behavior (e.g., "the SUV appears to have its brake lights on and is likely to slow down") and a structured response specifying the corresponding agent-level property values (e.g., not emergency vehicle, SUV, brakes on, slow, yes).

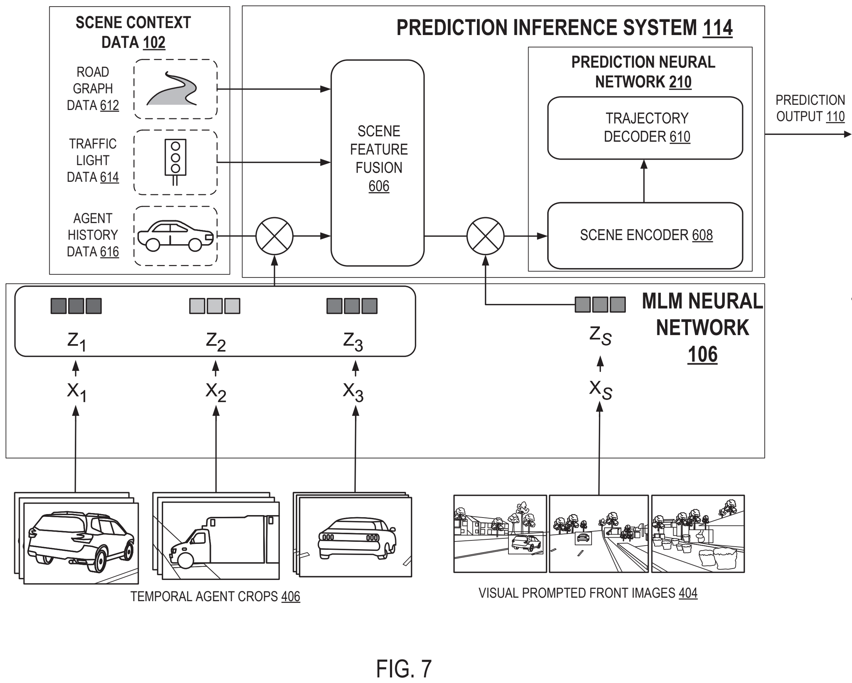

For example, the MLM neural network 106 can first generate a logical explanation of visual cues in the camera image (e.g., "the SUV is driving on a wet road with puddles, and the sky appears overcast, indicating rain"), as described in further detail below with reference to FIG. 7. The system can then use the MLM neural network 106 to generate a structured text output that specifies respective scene-level property values for the scene (e.g., rainy, day, service road, yes). The resulting scene-level output 310 can therefore be a text output that specifies the respective values for the set of scene-level properties of the scene and can optionally include a natural-language reasoning portion that explains those values, corresponding to the chain-of-thought reasoning generated by the MLM neural network 106.

The system can perform visual semantic analysis using an agent-level reasoning engine configured to perform language-based classification of agent behaviors and properties from sensor data. In some examples, the system can use a prompted reasoning interface or head of the MLM neural network 106 configured to generate textual outputs describing attributes for each agent in a driving scene.

For example, the system can use a pre-trained transformer-based multimodal backbone (e.g., an image-text transformer or unified encoder-decoder model) to interpret visual features from temporal agent crops and visual prompted front images and generate text outputs specifying agent-level properties, such as whether the agent is an emergency vehicle, its vehicle type, active signals, motion state, or intended behavior. That is, rather than relying on a conventional supervised motion-classification model, the system 402 can leverage the zero-shot reasoning capability of the MLM neural network 106 to perform semantic behavior inference through natural-language generation.

The system can then use the MLM neural network 106 to encode the one or more visual semantic outputs 408 into a respective second vector for each agent, and the system can provide the one or more second vectors as part of the prediction input 108 to the prediction inference system 114, as described in further detail below with reference to FIG. 7.

FIG. 5 is a diagram of example inputs for the example system.

The system can process the visual prompted front images 404 and the temporal agent crops 406 using the MLM neural network 106 to generate the prediction input 108, as described in further detail below with reference to FIG. 7.

The visual prompted front images 404 can include front-facing camera images captured by multiple camera sensors of the autonomous vehicle (e.g., front-left, front-center, and front-right cameras). In some examples, the system can incorporate the images 404 into the input prompt 308 that provides a global view of the driving scene for scene-level and agent-level reasoning.

The temporal agent crops 406 can include image regions cropped from the visual prompted front images 404 or other sensor readings to depict respective agents (e.g., vehicles, cyclists, or pedestrians) over multiple time points such as a current frame and one or more past frames. Each set of temporal crops can therefore depict the motion history of a corresponding agent, which provides temporal context for reasoning about the behavior and/or intention of the particular agent.

FIG. 6 is a diagram of example outputs for the MLM of the example system.

FIG. 6 illustrates visual semantic outputs 408 generated by the MLM neural network 106 for different types of agents in a scene. Each visual semantic output 408 includes a natural-language reasoning explanation and a corresponding structured table of agent-level property values.

In particular, the system 402 can process temporal agent crops 406 and, in some cases, visual prompted front images 404, together with an input prompt 308, using the MLM neural network 106 to generate chain-of-thought reasoning outputs describing the observed behavior and context of each agent. The system can then produce text outputs (e.g., scene level output 310 and visual semantic outputs 408) that indicate a respective set of agent-level properties, such as whether the agent is an emergency vehicle, whether the agent is jaywalking or crossing legally, whether the agent is associated with a micromobility device, whether the agent is turning, stopping, or waiting, and whether visibility is low.

For example, as shown in FIG. 7, the system can describe a pedestrian running in the middle of a road as "jaywalking" and predict that the pedestrian will continue moving in the same direction over the next few seconds. For another agent, such as an ambulance with hazard lights activated, the system can reason that the vehicle is stopped and unlikely to move in the near future. Similarly, for a pedestrian on an electric scooter crossing within a marked intersection, the system can identify the agent as "micromobility," determine that the crossing is legal, and predict that the agent will continue moving across the crosswalk.

Thus, the visual semantic outputs 408 generated by the MLM neural network 106 provide both interpretable reasoning text and structured property values, which the system can parse into numerical embeddings and incorporate into the prediction input 108 for downstream motion-forecasting tasks, as described above with reference to FIG. 6.

FIG. 7 is a block diagram of an MLM and a prediction inference system.

The system can process the visual prompted front images 404 and the temporal agent crops 406 using the MLM neural network 106 to generate multiple corresponding vectors. The system can then provide the vectors included in the prediction input 108 and scene context data 204 to the prediction inference system 114 to generate a prediction output 110.

In particular, the system processes multimodal prompt inputs including temporally sampled and/or annotated image crops corresponding to individual agents (e.g., temporal agent crops 406) using the MLM neural network 106 to generate, for each agent, a text output (e.g., visual semantic output(s) 408) identifying respective agent properties such as vehicle type, signal state, and near-term intention. Additionally, the system processes the visual-prompted front images 404 depicting the overall scene using the MLM neural network 106 to generate a text output (e.g., scene level output 310) identifying scene-level properties such as weather, time of day, road type, and intersection proximity.

The system then uses the MLM neural network 106 to convert each text output into a corresponding vector $x_i$. In particular, the system can process each text output using an embedding layer and/or a text encoder configured to map the textual values of the text output into numerical vector representations suitable for input to the prediction neural network 210. That is, for each agent $i$ (e.g., $i = 3$), the MLM neural network 106 generates an agent-level vector $x_i$ encoding the textual values of the agent properties (e.g., $x_1$, $x_2$, and $x_3$). For the scene, the MLM 106 can use the embedding layer to generate a scene-level vector $x_s$ that corresponds to the textual values of the scene-level properties.

Additionally, the MLM neural network 106 can process image frames depicting the overall scene to produce a structured text output identifying scene-level properties such as weather, time of day, road type, and intersection proximity.

After generating the text outputs, the system uses the MLM neural network 106 to convert each text output into a corresponding vector by processing the textual values through an embedding layer and/or projection network to map structured language outputs into numerical representations. In particular, the system can encode the respective textual values of each text output into a learned embedding space shared with the prediction neural network 210, such that semantically similar textual descriptions are represented by similar vectors. The system can generate a first vector from the respective values for the scene-level properties of the scene in the first text output. In some examples, for each agent, the system can generate a respective second vector from the respective values for the respective set of agent properties of the agent in the second text output for the agent.

The system then applies respective learned embedding layers to each of the vectors to generate feature embeddings $z_i$ and $z_S$. In particular, for each agent $i$, the system applies an embedding layer to the vector $x_i$ to generate a respective agent-feature embedding $z_i$, as shown by Equation 1:

$$(1) \qquad z_i = emb_a(x_i) \in R^{d_a}$$

where $emb_a$ is a learned linear embedding layer that projects the agent-level semantics into the feature space of the MLM neural network 106, and $d_a$ is the dimensionality of the agent-feature embedding space.

The system also applies an embedding layer to the scene-level text vector $x_S$ to generate a scene-feature embedding $z_S$, as shown by Equation 2:

$$(2) \qquad z_S = emb_S(x_S) \in R^{d_S}$$

where $emb_S$ is a learned linear embedding layer that projects the scene-level semantics into the feature space of the MLM neural network 106, and $d_S$ is the dimensionality of the scene-feature embedding space.

The system then provides the embeddings ($z_1$, $z_2$, $z_3$, $z_S$) as part of the prediction input 108 to the prediction inference system 114.

The prediction inference system 114 processes the prediction input 108 and the scene context data 204 using the prediction neural network 210 to generate the prediction output 110. The prediction inference system 114 includes a scene feature fusion module 606 and the prediction neural network 210. The prediction neural network 210 includes a scene encoder 608 and a trajectory decoder 610.

The scene context data 204 includes road-graph data 612, which represents the geometric and topological layout of road segments and lane boundaries, the traffic-light data 614, which represents state information of one or more signal lights within the scene, and agent history data 616, which represents prior motion states (e.g., positions, velocities, and headings) of detected agents.

The prediction inference system 114 performs scene feature fusion 606 to combine the scene context data 204 with the agent-feature embeddings $z_1$, $z_2$, $z_3$. In particular, the system aggregates the agent-feature embeddings $z_1$, $z_2$, $z_3$ with the corresponding agent history data 616 to generate aggregated agent features $f_i'$ for each agent that include both dynamic motion states and semantic intent information.

To regulate the contribution of each embedding, the prediction inference system 114 uses a multilayer perceptron $f_{\theta_\alpha}$ that generates a scalar information-gain coefficient $\alpha_i$, as shown by Equation 3:

$$(3) \qquad \alpha_i = tanh\left(f_{\theta_\alpha}(z_i)\right)$$

where $\alpha_i$ is a learned scalar information-gain coefficient that controls the influence of the agent-feature embedding $z_i$ on a baseline feature representation for the agent $i$, $f_{\theta_\alpha}$ is a learnable multilayer perceptron parametrized by $\theta_\alpha$, and *tanh* is the hyperbolic tangent function that constrains the resulting coefficient $\alpha_i$ to a range between -1 and 1 to ensure stable and bounded scaling during aggregation.

This mechanism allows the network to adaptively modulate the influence of the features depending on their relevance and quality. When the structured outputs are missing or noisy, the learned gain naturally approaches zero, which reduces their effect. Conversely, when the MLM neural network 106 provides informative context, such as identifying brake-light activation or poor weather, the system can increase the learned gain to increase prediction accuracy.

Each aggregation operation combines a baseline agent feature $f_i$ with a scaled agent-feature embedding $z_i$, as shown by Equation 3:

$$(4) \qquad f_i' = f_i + \alpha_i \cdot z_i$$

where $f_i$ represents the baseline feature based on the history trajectory of the particular agent. The system then performs scene feature fusion of the aggregated agent features $f_i'$ with the road graph data 612 and the traffic light data 614 to generate a unified feature representation.

The system then aggregates the feature representation with the scene-level feature embedding $z_S$ to generate an updated feature representation.

The prediction inference system 114 uses a multilayer perceptron $f_{\theta S}$ that generates a scalar information-gain coefficient $\alpha_S$, as shown by Equation 5:

$$(5) \qquad\qquad \alpha_S = tanh\left(f_{\theta_S}(z_S)\right)$$

The system aggregates the agent-feature embeddings $z_S$ with the aggregated agent features $f_i'$ to generate aggregated scene-level features $f_S'$, as shown by Equation 4:

$$(6) \qquad\qquad f_S' = f_S + \alpha_S \cdot z_S$$

where $f_S$ represents the fused baseline scene feature. The system then provides the agent features $f_i'$ and the scene features $f_S'$ to the scene encoder 608 of the prediction neural network 210.

The system processes the features using the scene encoder 608 to generate a unified latent representation. That is, the system uses the scene encoder 608 to integrate the multiple features (e.g., agent features, scene-level features, and map features) into the unified latent representation, which represents the spatial and temporal relationships among agents and the surrounding environment.

The scene encoder 608 can include any suitable neural-network backbone architecture for structured scene representation, such as a transformer-based encoder or a graph neural network configured to model multi-agent interactions and map connectivity. In some examples, the scene encoder 608 can be implemented as a multi-head attention encoder configured to process heterogeneous scene tokens representing agents, lanes, and traffic signals, or as a relational graph encoder that encodes inter-agent dependencies and scene geometry.

The system then processes the unified latent representation using the trajectory decoder 610 to generate the prediction output 110, such as predicted future trajectories for one or more agents or a planned trajectory for the autonomous vehicle.

The trajectory decoder 610 can include any suitable decoding architecture capable of generating temporally structured outputs, such as an attention-based decoder, a recurrent sequence model, or a mixture-density decoder configured to predict multiple possible trajectories and associated confidence scores. In some implementations, the trajectory decoder 610 is a query-based transformer decoder that generates a set of candidate future trajectories for each agent, where each trajectory defines a sequence of predicted agent states across multiple future time points.

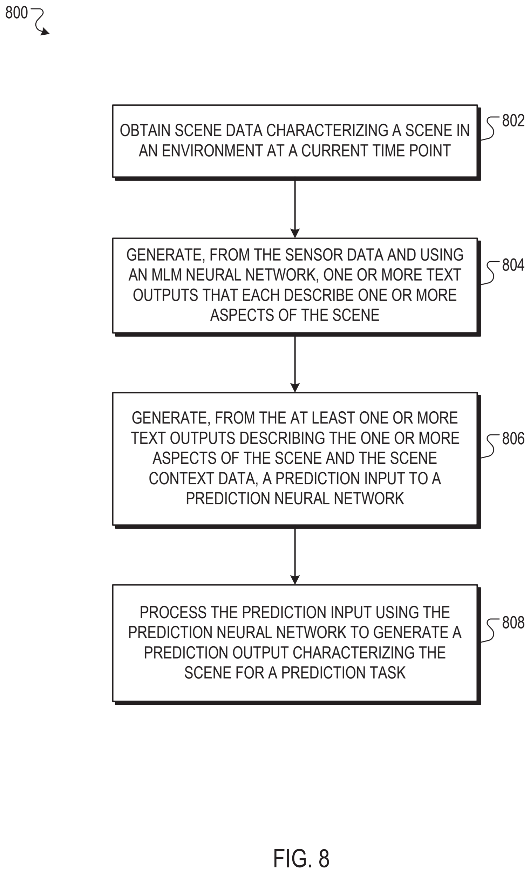

FIG. 8 is a flow diagram of an example process for performing a prediction task on received sensor data. For convenience, the process 800 will be described as being performed by a system of one or more computers located in one or more locations. For example, a system, e.g., the system 100 of FIG. 1, appropriately programmed in accordance with this specification, can perform the process 800.

The system can obtain scene data characterizing a scene in an environment at a current time point (802). The scene includes an autonomous vehicle and multiple agents, and the scene data includes sensor data and scene context data. The sensor data is captured by one or more sensors of the autonomous vehicle. In some examples, the sensor data includes one or more camera images captured by one or more camera sensors of the autonomous vehicles.

The system can generate, from the sensor data and using an MLM neural network, one or more text outputs that each describe one or more aspects of the scene (804).

The system can generate, from the sensor data, a first input to the MLM neural network, and the system can process the first input using the MLM neural network to generate a first text output that specifies a respective value for each of a set of scene-level properties of the scene. The scene-level properties can include weather conditions of the scene, time of day of the scene, road type of a roadway being navigated by the autonomous vehicle in the scene, or whether the autonomous vehicle is approaching an intersection.

In some examples, the first input includes one or more sensor readings from the sensor data and a prompt input that causes the MLM neural network to generate the first text output that specifies the respective values for the set of scene-level properties of the scene. The prompt input can include a chain-of-thought prompt, and the first text output includes a natural language reasoning output corresponding to the respective values for the set of scene-level properties.

In some examples, the system can generate, from the sensor data and using the MLM neural network, a respective second text output for each agent in a scene that specifies a respective value for each of a respective set of agent properties of the agent. In particular, the system can generate one or more second inputs from the sensor data, where each second input corresponds to one or more of the agents, and the system can process each of the second inputs using the MLM neural network to generate the respective second text outputs for the corresponding one or more agents.

In this case, the multiple agents include agents of multiple different agent types, and each second input corresponds to a different one of the agent types. That is, in some examples, each second input can include one or more annotated sensor readings that are each cropped from a corresponding sensor reading to depict a corresponding agent. In some examples, the second input includes one or more cropped sensor readings that are each cropped from a corresponding sensor reading to depict a corresponding agent.

The system can generate, from the at least one or more text outputs describing the one or more aspects of the scene and the scene context data, a prediction input to a prediction neural network (806). In particular, the system can generate a first vector from the respective values for the scene-level properties of the scene in the first text output. In some examples, for each agent, the system can generate a respective second vector from the respective values for the respective set of agent properties of the agent in the second text output for the agent.

The system can process the prediction input using the prediction neural network to generate a prediction output characterizing the scene for a prediction task (808).

In some examples, the system can then control the autonomous vehicle using the prediction output.

In some examples, the prediction output is a motion forecasting output that predicts a respective future motion of each of the one or more of the multiple agents after the current time point. In another example, the prediction output is a planning output that specifies a planned future trajectory for the autonomous vehicle after the current time point.

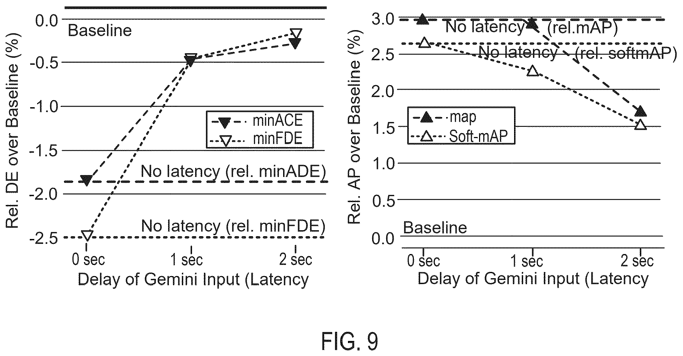

FIG. 9 is a graph illustrating an example comparison of prediction stability and accuracy across different motion-forecasting systems over future simulation steps. The graph plots a divergence metric that quantifies the displacement error between predicted agent trajectories and corresponding ground-truth positions as a function of the number of future simulation time steps.

In particular, FIG. 9 compares the performance of the described Plug-and-Forecast (PnF) system with that of baseline motion-forecasting models that do not incorporate reasoning outputs from an MLM. As shown, the predictions generated by the Plug-and-Forecast system exhibit substantially lower divergence over extended time horizons, resulting in a flatter error curve and improved long-term prediction consistency. By contrast, the baseline models show more rapid error growth, which indicates less stable and less realistic trajectory forecasts during long-term simulation rollouts.

Accordingly, by integrating language-based reasoning features from the MLM into the prediction neural network, the described system produces more accurate and temporally consistent motion forecasts than conventional approaches that rely solely on numerical perception features.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data. The data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

**EP 4 745 917 A1**

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

The specification includes the following subject-matter expressed in the form of clauses 1-21.

1. A method performed by one or more computers, the method comprising:

obtaining scene data characterizing a scene in an environment at a current time point, wherein the scene comprises an autonomous vehicle and a plurality of agents and wherein the scene data comprises sensor data captured by one or more sensors of the autonomous vehicle and scene context data;

generating, from the sensor data and using a multimodal language model (MLM) neural network, one or more text outputs that each describe one or more aspects of the scene;

generating, from at least the one or more text outputs describing the one or more aspects of the scene and the scene context data, a prediction input to a prediction neural network; and

processing the prediction input using the prediction neural network to generate a prediction output characterizing the scene for a prediction task.

2. The method of clause 1, further comprising:
controlling the autonomous vehicle using the prediction output.

3. The method of any one of clauses 1-2, wherein the prediction output is a motion forecasting output that predicts respective future motion of each of one or more of the plurality of agents after the current time point.

4. The method of any one of clauses 1-3, wherein the prediction output is a planning output that specifies a planned future trajectory for the autonomous vehicle after the current time point.

5. The method of any one of clauses 1-4, wherein the sensor data comprises one or more camera images captured by one or more camera sensors of the autonomous vehicle.

6. The method of any one of clauses 1-5, wherein generating, from the sensor data and using a multimodal language model (MLM) neural network, one or more text outputs that each describe one or more aspects of the scene comprises:

generating, from the sensor data, a first input to the MLM neural network; and

processing the first input using the MLM neural network to generate a first text output that specifies a respective value for each of a set of scene-level properties of the scene.

7. The method of clause 6, wherein the set of scene-level properties comprises one or more of:

14

weather conditions of the scene;

time of day of the scene;

road type of a roadway being navigated by the autonomous vehicle in the scene; or

whether the autonomous vehicle is approaching an intersection.

8. The method of clause 6 or clause 7, wherein the first input comprises one or more sensor readings from the sensor data and a prompt input that causes the MLM neural network to generate the first text output that specifies the respective values for the set of scene-level properties of the scene.

9. The method of clause 8, wherein the prompt input comprises a chain-of-thought prompt and wherein the first text output further comprises a natural language reasoning output corresponding to the respective values for the set of scene-level properties.

10. The method of any one of clauses 6-9, wherein generating, from at least the one or more text outputs describing the one or more aspects of the scene and the scene context data, a prediction input to a prediction neural network comprises:

generating a first vector from the respective values for the scene-level properties of the scene in the first text output.

11. The method of any one of clauses 1-10, wherein generating, from the sensor data and using a multimodal language model (MLM) neural network, one or more text outputs that each describe one or more aspects of the scene comprises:

generating, from the sensor data and using the MLM neural network, a respective second text output for each agent in the scene that specifies a respective value for each of a respective set of agent properties of the agent.

12. The method of clause 11, wherein generating, from at least the one or more text outputs describing the one or more aspects of the scene and the scene context data, a prediction input to a prediction neural network comprises:

for each agent, generating a respective second vector from the respective values for the respective set of agent properties of the agent in the second text output for the agent.

13. The method of clause 11 or clause 12, wherein generating, from the sensor data and using the MLM neural network, a respective second text output for each agent in the scene that specifies a respective value for each of a respective set of agent properties of the agent comprises:

generating one or more second inputs from the sensor data, wherein each second input corresponds to one or more of the agents; and

processing each of the second inputs using the MLM neural network to generate the respective second text outputs for the corresponding one or more agents.

14. The method of any one of clauses 11-13, wherein the plurality of agents include agents of a plurality of different agent types and each second input corresponds to a different one of the agent types.

15. The method of any one of clauses 11-14, wherein different agent types have different agent properties.

16. The method of any one of clauses 11-13, wherein each second input includes one or more annotated sensor readings that are annotated to depict locations of one or more of the agents.

17. The method of any one of clauses 11-13, wherein each second input includes one or more cropped sensor readings that are each cropped from a corresponding sensor reading to depict a corresponding agent.

18. The method of any one of clauses 1-17, wherein the prediction neural network has been trained on training data for the prediction task.

19. The method of clause 18, wherein the MLM neural network has been held fixed during the training of the prediction neural network on the prediction task.

20. A system comprising:

one or more computers; and

one or more storage devices storing instructions that, when executed by the one or more computers, cause the one or more computers to perform the respective operations comprising:

obtaining scene data characterizing a scene in an environment at a current time point, wherein the scene comprises an autonomous vehicle and a plurality of agents and wherein the scene data comprises sensor data captured by one or more sensors of the autonomous vehicle and scene context data;

generating, from the sensor data and using a multimodal language model (MLM) neural network, one or more text outputs that each describe one or more aspects of the scene;

generating, from at least the one or more text outputs describing the one or more aspects of the scene and the scene context data, a prediction input to a prediction neural network; and

processing the prediction input using the prediction neural network to generate a prediction output characterizing the scene for a prediction task.

21. One or more computer-readable storage media storing instructions that when executed by one or more computers cause the one or more computers to perform operations comprising: obtaining scene data characterizing a scene in an environment at a current time point, wherein the scene comprises an autonomous vehicle and a plurality of agents and wherein the scene data comprises sensor data captured by one or more sensors of the autonomous vehicle and scene context data;

generating, from the sensor data and using a multimodal language model (MLM) neural network, one or more text outputs that each describe one or more aspects of the scene;
generating, from at least the one or more text outputs describing the one or more aspects of the scene and the scene context data, a prediction input to a prediction neural network; and
processing the prediction input using the prediction neural network to generate a prediction output characterizing the scene for a prediction task.

**Claims**

1.  A method performed by one or more computers, the method comprising:

    obtaining scene data characterizing a scene in an environment at a current time point, wherein the scene comprises an autonomous vehicle and a plurality of agents and wherein the scene data comprises sensor data captured by one or more sensors of the autonomous vehicle and scene context data;
    generating, from the sensor data and using a multimodal language model (MLM) neural network, one or more text outputs that each describe one or more aspects of the scene;
    generating, from at least the one or more text outputs describing the one or more aspects of the scene and the scene context data, a prediction input to a prediction neural network; and
    processing the prediction input using the prediction neural network to generate a prediction output characterizing the scene for a prediction task.

2.  The method of claim 1, further comprising:
    controlling the autonomous vehicle using the prediction output.

3.  The method of any one of claims 1-2, wherein the prediction output is a motion forecasting output that predicts respective future motion of each of one or more of the plurality of agents after the current time point; and/or wherein the prediction output is a planning output that specifies a planned future trajectory for the autonomous vehicle after the current time point.

4.  The method of any one of claims 1-3, wherein the sensor data comprises one or more camera images captured by one or more camera sensors of the autonomous vehicle.

5.  The method of any one of claims 1-4, wherein generating, from the sensor data and using a multimodal language model (MLM) neural network, one or more text outputs that each describe one or more aspects of the scene comprises:

    generating, from the sensor data, a first input to the MLM neural network; and
    processing the first input using the MLM neural network to generate a first text output that specifies a respective value for each of a set of scene-level properties of the scene;
    optionally wherein the set of scene-level properties comprises one or more of:

    weather conditions of the scene;
    time of day of the scene;
    road type of a roadway being navigated by the autonomous vehicle in the scene; or
    whether the autonomous vehicle is approaching an intersection.

6.  The method of claim 5, wherein the first input comprises one or more sensor readings from the sensor data and a prompt input that causes the MLM neural network to generate the first text output that specifies the respective values for the set of scene-level properties of the scene; optionally wherein the prompt input comprises a chain-of-thought prompt and wherein the first text output further comprises a natural language reasoning output corresponding to the respective values for the set of scene-level properties.

7. The method of any one of claims 5-6, wherein generating, from at least the one or more text outputs describing the one or more aspects of the scene and the scene context data, a prediction input to a prediction neural network comprises: generating a first vector from the respective values for the scene-level properties of the scene in the first text output.

8. The method of any one of claims 1-7, wherein generating, from the sensor data and using a multimodal language model (MLM) neural network, one or more text outputs that each describe one or more aspects of the scene comprises:
generating, from the sensor data and using the MLM neural network, a respective second text output for each agent in the scene that specifies a respective value for each of a respective set of agent properties of the agent.

9. The method of claim 8, wherein generating, from at least the one or more text outputs describing the one or more aspects of the scene and the scene context data, a prediction input to a prediction neural network comprises:
for each agent, generating a respective second vector from the respective values for the respective set of agent properties of the agent in the second text output for the agent.

10. The method of claim 8 or claim 9, wherein generating, from the sensor data and using the MLM neural network, a respective second text output for each agent in the scene that specifies a respective value for each of a respective set of agent properties of the agent comprises:

generating one or more second inputs from the sensor data, wherein each second input corresponds to one or more of the agents; and
processing each of the second inputs using the MLM neural network to generate the respective second text outputs for the corresponding one or more agents.

11. The method of any one of claims 8-10, wherein the plurality of agents include agents of a plurality of different agent types and each second input corresponds to a different one of the agent types; or wherein each second input includes one or more annotated sensor readings that are annotated to depict locations of one or more of the agents; or wherein each second input includes one or more cropped sensor readings that are each cropped from a corresponding sensor reading to depict a corresponding agent.

12. The method of any one of claims 8-11, wherein different agent types have different agent properties.

13. The method of any one of claims 1-12, wherein the prediction neural network has been trained on training data for the prediction task; optionally wherein the MLM neural network has been held fixed during the training of the prediction neural network on the prediction task.

14. A system comprising:

one or more computers; and
one or more storage devices storing instructions that, when executed by the one or more computers, cause the one or more computers to perform the respective operations comprising:

obtaining scene data characterizing a scene in an environment at a current time point, wherein the scene comprises an autonomous vehicle and a plurality of agents and wherein the scene data comprises sensor data captured by one or more sensors of the autonomous vehicle and scene context data;
generating, from the sensor data and using a multimodal language model (MLM) neural network, one or more text outputs that each describe one or more aspects of the scene;
generating, from at least the one or more text outputs describing the one or more aspects of the scene and the scene context data, a prediction input to a prediction neural network; and
processing the prediction input using the prediction neural network to generate a prediction output characterizing the scene for a prediction task.

15. One or more computer-readable storage media storing instructions that when executed by one or more computers cause the one or more computers to perform operations comprising:

obtaining scene data characterizing a scene in an environment at a current time point, wherein the scene comprises an autonomous vehicle and a plurality of agents and wherein the scene data comprises sensor data captured by one or more sensors of the autonomous vehicle and scene context data;

generating, from the sensor data and using a multimodal language model (MLM) neural network, one or more text outputs that each describe one or more aspects of the scene;

generating, from at least the one or more text outputs describing the one or more aspects of the scene and the scene context data, a prediction input to a prediction neural network; and

processing the prediction input using the prediction neural network to generate a prediction output characterizing the scene for a prediction task.

100

124

TRAINING SYSTEM 122

TRAINING EXAMPLES 132

PREDICTION TRAINING SYSTEM 138

TRAINING PERCEPTION OUTPUT 140

TRAINING ENGINE 142

CURRENT PARAMETERS 126

UPDATED MODEL PARAMETERS 144

TRAINING DATA STORE 130

MODEL PARAMETERS 128

TRAINING DATA 134

TRAINED PARAMETER VALUES 146

SENSOR SYSTEM 104

SCENE DATA 102

MLM NEURAL NETWORK 106

PREDICTION INPUT 108

PREDICTION INFERENCE SYSTEM 114

PREDICTION OUTPUT 110

PLANNING SYSTEM 116

USER INTERFACE SYSTEM 118

ON-BOARD SYSTEM 112

120

FIG. 1

**MLM INPUTS 202**

"What is happening in the scene? What are the others doing?"

SCENE CONTEXT DATA 204

PREDICTION INPUT 108

Plug!

**MLM NEURAL NETWORK 106**

**PREDICTION INFERENCE SYSTEM 114**

PREDICTION NEURAL NETWORK 210

Forecast!

Future 1

Future 2

PREDICTION OUTPUT 110

FIG. 2

## MLM INPUT 202-A

### SENSOR DATA 304

#### SENSOR READING(S) 306

### INPUT PROMPT 308

You are a self driving car. You have a camera pointing forward (this image is what is in front of you), and you see the following scene before you. You need to check what the weather condition of your location is: sunny, rainy, snowy, foggy, dark, or unsure... You need to check if it is day time, evening, or night time... You need to check what type of road you are on: residential, highway, express way, service road, or other. Are you approaching an intersection?...
For Example: "Example 1, the weather condition is raining..." Now we have an image of this scene: {%img}

## MLM NEURAL NETWORK 106

## SCENE LEVEL OUTPUT 310

Logic: The scene shows a white SUV driving on a wet road, with a building in the background and trees on both sides. The sky is overcast and there are puddles on the road, indicating that it is raining. The lighting suggests it is daytime. Based on the environment and the presence of shops in the background, the road is likely a service road. There is a white car in front of me, and there is a lane merge to the right. The anomaly is the white car in front of me. I need to adjust my speed and be prepared for the lane merge in the next 3 seconds. Final answer: rainy, day, service, yes

FIG. 3

EP 4 745 917 A1

**MLM INPUT 202-B**

VISUAL PROMPTED FRONT IMAGES 404

Vehicle 1 | Vehicle 2 | Vehicle 3
TEMPORAL AGENT CROPS 406

**INPUT PROMPT 308**

You are a self driving car. You have 8 cameras pointing in all directions. For all objects in the scene, tell me the car type, signals, and intentions. Is the vehicle an emergency vehicle or first responder? What type of car? Select from: sedan/ truck/bus/suv/other. Does this car have turn signal/ brake lights/hazard lights/none/unsure on? Is this car heavily occluded by a stationary object? How will the agent move in the next 3 seconds? Will it keep forward/slow down/turn/u-turn/park/stop? For example:
"Explanation of certain predictions:
• SUV (first row):   This SUV is approaching the intersection..." For each vehicle, I also give you 3 frames from the past second {%imgs}... Also use the scene context from the front cameras {%imgs}... Default to "unsure" unless absolutely certain. Explain first before answering, output the table of responses last, wrapped with <ANSWER> tags.

**MLM NEURAL NETWORK 106**

**VISUAL SEMANTIC OUTPUT(S) 408**

Explanation of certain predictions:

• SUV (first row):   This SUV is approaching the intersection and appear to be have its brake lights on. Thus. it's likely to slow down, with a small likelihood of turning or stopping. Also, from the front camera image, we can see...

• SEDAN (second row):   It is difficult to predict the intention of the sedan, as there is no information about the signal or current position. It is likely to keep forward as it is in the centre of the lane.

• ...

| EV? | Type | Signal | Forw. | Slow | Turn | Stop | ⋯ | OCCl.? |
|---|---|---|---|---|---|---|---|---|
| no | suv | brakes | no | yes | unsure | unsure | ⋯ | no |
| no | sedan | none | yes | unsure | unsure | no | ⋯ | no |
| ... | | | | | | | | |

FIG. 4

EP 4 745 917 A1

FIG. 5

**VISUAL SEMANTIC OUTPUT(S) 408**

Explanation of certain predictions:
- Pedestrian 1: The pedestrian is running in the middle of a road, and there is no crosswalk nearby, indicating jaywalking. The pedestrian is not on a micromobility device. Despite being in the road, the pedestrian is likely going to continue running in the same direction and not change course in the next 3 seconds.

| Jay Walking? | Micromobility | Sidewalk? | Cross | Turn | Stop | Waiting | Low Visibility |
|---|---|---|---|---|---|---|---|
| YES | NO | NO | NO | NO | NO | NO | NO |

Explanation of certain predictions:
- Object 1: An ambulance with hazard lights turned on. It is parked and unlikely to move in the next 3 seconds.

| EV? | Vehicle Type | Signal | Forw. | Slow | Turn | U-Turn | Parked | Stop | Occl.? |
|---|---|---|---|---|---|---|---|---|---|
| YES | TRUCK | HAZAR. | NO | NO | UNSURE | NO | NO | UNSURE | NO |

Explanation of certain predictions:
- Pedestrian on Scooter (first row): The pedestrian is on a electric scooter, and is legally crossing at an intersection. The road markings appear to be a crosswalk for the pedestrian. We should drive carefully and yield. Because the crossing is at a crosswalk, it is legal, and therefore not jaywalking. Finally, because it is at the crosswalk, they'll likely cross in the next 3 seconds.

| Jay Walking? | Micromobility | Sidewalk? | Cross | Turn | Stop | Waiting | Low Visibility |
|---|---|---|---|---|---|---|---|
| NO | YES | NO | YES | NO | NO | NO | NO |

FIG. 6

FIG. 7

800

OBTAIN SCENE DATA CHARACTERIZING A SCENE IN AN ENVIRONMENT AT A CURRENT TIME POINT ⟋802

GENERATE, FROM THE SENSOR DATA AND USING AN MLM NEURAL NETWORK, ONE OR MORE TEXT OUTPUTS THAT EACH DESCRIBE ONE OR MORE ASPECTS OF THE SCENE ⟋804

GENERATE, FROM THE AT LEAST ONE OR MORE TEXT OUTPUTS DESCRIBING THE ONE OR MORE ASPECTS OF THE SCENE AND THE SCENE CONTEXT DATA, A PREDICTION INPUT TO A PREDICTION NEURAL NETWORK ⟋806

PROCESS THE PREDICTION INPUT USING THE PREDICTION NEURAL NETWORK TO GENERATE A PREDICTION OUTPUT CHARACTERIZING THE SCENE FOR A PREDICTION TASK ⟋808

FIG. 8

FIG. 9

# EP 4 745 917 A1

**EUROPEAN SEARCH REPORT**

Application Number

EP 25 21 6020

Europäisches Patentamt
European Patent Office
Office européen des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Jiang Bo ET AL: "Senna: Bridging Large Vision-Language Models and End-to-End Autonomous Driving", , 29 October 2024 (2024-10-29), pages 1-13, XP093362181, Retrieved from the Internet: URL:https://arxiv.org/pdf/2410.22313 * the whole document * ----- | 1-15 | INV. G06V10/82 G06T7/20 G06V20/56 ADD. G06V20/58 |
| X,P | Luo Katie ET AL: "Enhanced Motion Forecasting with Plug-and-Play Multimodal Large Language Models", , 20 October 2025 (2025-10-20), pages 1-15, XP093362710, Retrieved from the Internet: URL:https://arxiv.org/pdf/2510.17274 * the whole document * ----- | 1-15 | |

**TECHNICAL FIELDS SEARCHED (IPC)**

G06V
G06T

The present search report has been drawn up for all claims

| Place of search | Date of completion of the search | Examiner |
|---|---|---|
| The Hague | 25 February 2026 | Granger, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)